# EUROPÄISCHE PATENTSCHRIFT

(11) **EP 3 655 663 B1**
(45) Veröffentlichungstag und Bekanntmachung des Hinweises auf die Patenterteilung: **09.10.2024**
(21) Anmeldenummer: 18740797.8
(22) Anmeldetag: 12.07.2018
(51) Int. Cl.: F04D 25/16, F04D 27/00, F24F 11/74

(54) **VERFAHREN ZUM REGELN VON WENIGSTENS ZWEI VENTILATOREN**
METHOD FOR CONTROLLING AT LEAST TWO FANS
PROCÉDÉ DE RÉGLAGE D'AU MOINS DEUX VENTILATEURS

(30) Priorität: 20.07.2017 DE 102017116399
(43) Veröffentlichungstag der Anmeldung: 27.05.2020
(73) Patentinhaber: ebm-papst Mulfingen GmbH & Co. KG, 74673 Mulfingen (DE)
(72) Erfinder: FESSEL, Andreas, 97990 Weikersheim (DE); SCHWAB, Stefan, 74076 Heilbronn (DE); EBERLE, Walter, 74673 Mulfingen (DE)
(74) Vertreter: Staeger & Sperling Partnerschaftsgesellschaft mbB
(86) Internationale Anmeldenummer: PCT/EP2018/068886
(87) Internationale Veröffentlichungsnummer: WO 2019/016056

(56) Entgegenhaltungen:
- WO-A2-2004/085928
- DE-U1- 202016 103 978
- GB-A- 2 134 646
- US-A1- 2010 057 258
- US-A1- 2012 244 015
- US-B1- 6 227 961

## Beschreibung

Die Erfindung betrifft ein Regelungsverfahren für den energieoptimierten bzw. wirkungsgradoptimierten Betrieb von wenigstens zwei oder einer Vielzahl von Ventilatoren zur Erzeugung eines bestimmten Betriebszustands in einem Lüftungssystem.

Die Verwendung von mehreren Ventilatoren oder Ventilatorgruppen mit einer Vielzahl von einzelnen Ventilatoren zur Erzeugung eines definierten Volumenstromes bei variabler Druckerhöhung oder eines definierten Drucks bei variablem Volumenstrom kann unter verschiedenen Betriebsbedingungen der beteiligten Ventilatoren erfolgen, die jeweils einen anderen Gesamtenergiebedarf und demnach auch einen anderen Gesamtwirkungsgrad mit sich bringen.

Beim Einsatz von mehreren Ventilatoren oder Ventilatorbaugruppen oder Kombinationen daraus zeigt sich in der Praxis das Problem, diese je nach lüftungstechnischer Aufgabe so einzusetzen, dass, das jeweilige System in der Gesamtheit mit einem optimierten oder optimalen Gesamtenergiebedarf bzw. Gesamtwirkungsgrad betrieben wird.

Somit besteht ein Bedarf nach einem Regelungsverfahren für eine Anzahl von wenigstens zwei Ventilatoren, welche als System relativ zueinander derart geregelt werden, dass bei einem vorgegebenen Sollwert (Volumenstrom dV/dt - im Folgenden auch kurz V genannt- oder Druckerhöhung Δp_{sys}) für wenigstens einen der Ventilatoren aus der Anzahl der Ventilatoren der Gesamtenergiebedarf und der Gesamtwirkungsgrad des Systems optimiert wird.

Druckschriftlicher Stand der Technik auf dem vorliegenden technischen Gebiet, welcher den Oberbegriff des Anspruchs 1 widerspiegelt, ist in den Dokumenten WO 2004/085 928 A2 und US 2012/244 015 A1 offenbart.

Der Erfindung liegt deshalb die Aufgabe zugrunde, ein Verfahren zur Regelung sowie eine Regeleinrichtung für eine Mehrzahl von Ventilatoren und/oder Ventilatorgruppen bereit zu stellen, mit dessen Hilfe eine Energieoptimierung und Wirkungsgradverbesserung des Gesamtsystems erzielt werden kann, ohne dass zusätzliche bauliche Maßnahmen an einzelnen der Ventilatoren vorgenommen werden müssten.

Diese Aufgabe wird durch die Merkmalskombination gemäß Anspruch 1 sowie gemäß Anspruch 10 gelöst.

Ein Grundgedanke der Erfindung besteht darin, dass die Konzeption einer Regeleinrichtung und das Regelungsverfahren für die Mehrzahl an Ventilatoren darauf beruhen, dass alle Ventilatoren eines Systems ihren Betriebszustand sowie ihr jeweils energetisches Optimierungspotential kennen. Auf dieser Basis kann eine Regeleinrichtung die Aufteilung der Luftmengen auf die einzelnen Ventilatoren bzw. das Druckangebot im System so einstellen, dass ein Betrieb der einzelnen Ventilatoren sowie des Gesamtsystems mit optimalem Wirkungsgrad erreicht wird.

Erfindungsgemäß ist daher ein Verfahren zum Regeln eines Systems aus einer Anzahl n von mindestens zwei Ventilatoren und/oder Ventilatorgruppen vorgesehen, zur Erzeugung eines definierten Sollwertes entweder eines definierten Volumenstromes im System bei variabler Druckerhöhung oder umgekehrt bei einem variablen Volumenstrom und bei fester Druckerhöhung, mit den folgenden Schritten, wobei es sich bei dem genannten Druck bzw. der Druckerhöhung, jeweils um die statische Druckerhöhung Δpₛₜ handelt:
a) Ermitteln eines Betriebszustandes der Ventilatoren;
b) Ermitteln eines energetischen Optimierungspotentials und eines optimierten Betriebszustandes des und/oder der jeweiligen Ventilatoren (vorzugsweise auch Abspeichern der Optimierungsdaten);
c) Vergleichen des ermittelten Betriebszustands im zuvor genannten Schritt a) mit dem jeweils optimierten Betriebszustand des und/oder der Ventilatoren aus Schritt b), um daraus eine Optimierungsempfehlung bezogen auf (wenigstens) einen Ventilator zu erhalten und
d) Korrektur des jeweils variablen Sollwertes (Volumenstromes oder Druckerhöhung) durch Änderung des Betriebspunktes bzw. des aktuellen Betriebszustand wenigstens eines Ventilators je nachdem welcher vorgegebene Sollwert fest und welcher Sollwert variabel ist, um wenigstens einen der Ventilatoren in einen energetisch optimierten oder optimalen Betriebspunkt zu bringen und dadurch einen Wirkungsgrad η_{G} des Systems zu erhöhen. Der jeweils fest vorgegebene Sollwert bleibt dabei durch eine separate Regelung unverändert.

Unter "energetisch optimiertem Zustand" im Sinne der vorliegenden Erfindung ist ein Zustand zu verstehen, bei dem ein Ventilator nach Anpassen seines Betriebszustandes einen besseren Wirkungsgrad besitzt, als zu dem Zeitpunkt vor der Anpassung und damit zugleich einen "energetisch optimierten Zustand" für das gesamte System, bei der die Summe der Leistungsaufnahmen aller Ventilatoren nach einer Optimierungsanpassung geringer ist, als zum Zeitpunkt vor der Anpassung.

Somit geht mit dem Ermitteln des energetischen Optimierungspotentials im o. g. Schritt b) einher, bei welchen konkreten Betriebszuständen ein bestimmter Ventilator jeweils in einen energetisch optimierten Zustand gebracht werden kann. Diese Betriebsdaten können im Regelungsverfahren dazu genutzt werden, den betreffenden Ventilator in einen bestimmten Betriebszustand zu überführen.

Mit Vorteil erfolgt der Schritt d) dergestalt, dass eine Mehrzahl, eine oder mehrere Ventilatorbaugruppen oder alle Ventilatoren in einen jeweils gegenüber dem nicht korrigierten Betriebspunkt energetisch optimierten oder optimalen Betriebspunkt gebracht werden.

Es kann weiter vorteilhaft sein, wenn bei dem Verfahren zur Erhöhung des Wirkungsgrads η_{G} des Systems bei einem definierten festen Sollwertes (entweder Volumenstrom oder Druckerhöhung) ein oder mehrere der Ventilatoren hierzu komplett abgeschaltet werden.

Gemäß der Erfindung ist vorgesehen, dass im oben genannten Schritt a) die Ermittlung des Betriebszustandes der Ventilatoren dadurch erfolgt, dass wenigstens ein Volumenstrom V und eine Drehzahl n der jeweiligen Ventilatoren und deren Druckerhöhung Δpₛₜ, eine Leistungsaufnahme P und ein Wirkungsgrad η_{G} als Funktion des Volumenstroms und der Drehzahl erfasst bzw. ermittelt werden, welche vorzugsweise in der Motorelektronik der Vielzahl von Ventilatoren hinterlegt werden.

Die Druckerhöhung Δpₛₜ und die Leistungsaufnahme P des jeweiligen Ventilators werden dabei bevorzugt aus dessen Volumenstrom V und dessen Drehzahl n ermittelt. Insgesamt ist vorgesehen, die Größen Druckerhöhung Δpₛₜ, Leistungsaufnahme P und Wirkungsgrad η_{G} als Funktionen f = f (V,n) zu erfassen und für das Regelungsverfahren verfügbar zu haben.

Das erfindungsgemäße Verfahren ist weiter bevorzugt so ausgestalten, dass zum Ermitteln des Optimierungspotentials im oben genannten Schritt b) ein optimierter Volumenstrom Vₒₚₜ und eine optimierte Druckerhöhung Δpₒₚₜ ermittelt werden.

Es ist weiter mit Vorteil vorgesehen, dass aus dem Vergleich der Betriebszustände aus Schritt a) und Schritt b) eine Optimierungsempfehlung in Form einer Anpassung des aktuellen Betriebszustandes einer oder mehrere der Ventilatoren erfolgt, wobei
- die Optimierungsempfehlung bei einem definierten konstant zu haltendem Volumenstrom V_{G,Soll} darin besteht, eine Druckerhöhung oder Drucksenkung vorzunehmen, je nachdem ob die optimierte Druckerhöhung Δpₒₚₜ größer oder kleiner ist, als die ermittelte Druckerhöhung Δpₛₜ oder
- die Optimierungsempfehlung bei einem definierten konstant zu haltendem Druck Δp_{G,Soll} darin besteht, den Volumenstrom zu erhöhen oder zu senken, je nachdem ob der optimiert Volumenstrom Vₒₚₜ größer oder kleiner ist, als der ermittelte Volumenstrom V.

Bei der Ermittlung der Optimierungsempfehlung wird zur Anpassung des Betriebszustands bei Schritt c) erfindungsgemäß berücksichtigt, welcher Ventilator bzw. welche Ventilator-Gruppe einen jeweils höchsten Leistungsbeitrag bei einer Luftförderung im System besitzt. Die Erfassung der Leistungsaufnahme P jedes Ventilators jeweils vor und nach einer Korrektur erfolgt in Schritt d) und es wird ermittelt, ob die Gesamtsumme aller Leistungsaufnahmen P der Ventilatoren als Reaktion auf den Optimierungsschritt gegenüber der zuvor ermittelten Gesamtsumme aller Leistungsaufnahmen P reduziert wurde.

Im Falle dass die Gesamtsumme aller Leistungsaufnahmen P nach dem Optimierungsschritt nicht reduziert wurde, wird die Anpassung im zuvor durchgeführten Optimierungsschritt wieder rückgängig gemacht.

Diese Maßnahmen des Anpassens werden zyklisch solange wiederholt, bis sich ein definierter Gesamtwirkungsgrad oder ein jeweils zum vorherigen Zyklus optimierter Gesamtwirkungsgrad ergibt oder man sich diesem asymptotisch nähert, wobei die Maßnahmen nach einer definierten Anzahl von Zyklen oder bei einem definierten Betriebspunkt abgebrochen werden.

Ein weiterer Aspekt der vorliegenden Erfindung betrifft eine Regeleinrichtung zum Ausführen eines wie zuvor beschriebenen Verfahrens, wobei die Regeleinrichtung folgendes aufweist:
- Erfassungsmittel zum Ermitteln mindestens des Volumenstroms und der Drehzahl n einzelner und/oder aller Ventilatoren;
- Ermitteln eines energetischen Optimierungspotentials und eines optimierten Betriebszustandes der jeweiligen Ventilatoren, wie Vₒₚₜ = f(n), Δp_{ST,opt} = f(n),, welche drehzahlkonstant (mit der Drehzahl n) erreicht werden können;
- einen Komparator zum Vergleichen von ermittelten Betriebszuständen und optimierten Betriebszuständen, um daraus eine spezifische Optimierungsempfehlung zu gewinnen;
- Mittel zur Anpassung des jeweils variablen Sollwertes (Volumenstrom oder Druckerhöhung) durch Änderung des Betriebszustandes wenigstens eines Ventilators je nachdem welcher Sollwert im System fest vorgegeben ist, um wenigstens einen der Ventilatoren in einen energetisch optimierten oder optimalen Betriebszustand zu bringen und dadurch den Wirkungsgrad η_{G} des Systems zu erhöhen.

Es gibt verschiedene praktische Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnungen verwiesen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen:
- Fig. 1: ein Diagramm, welches den Zusammenhang der Leistungsaufnahme P zu dem Volumenstrom V und der Drehzahl n eines beispielhaften Ventilators zeigt;
- Fig. 2: ein Diagramm, welches den Zusammenhang der Druckerhöhung Δpₛₜ (statischer Druck) zu dem Volumenstrom V und der Drehzahl n eines beispielhaften Ventilators zeigt;
- Fig. 3: ein Diagramm, welches den Zusammenhang des Wirkungsgrads ηₛₜ zu dem Volumenstrom V und der Drehzahl n eines beispielhaften Ventilators zeigt;
- Fig. 4: ein Diagramm, welches den Verlauf des optimalen Volumenstroms in Abhängigkeit der Drehzahl eines Ventilators darstellt;
- Fig. 5: ein Diagramm, welches den Verlauf des optimalen statischen Drucks Δpₒₚₜ in Abhängigkeit der Drehzahl eines Ventilators darstellt;
- Fig. 6: ein Diagramm, welches den Verlauf des optimalen Wirkungsgrades ηₒₚₜ in Abhängigkeit der Drehzahl eines Ventilators darstellt;
- Fig. 7: eine Gegenüberstellung zweier Zustände eines Ventilators bei einem konstanten Volumenstrom im System, wobei der statische Druck im System reduziert wurde, um das Druckangebot Δpₛₜ für den Ventilator zu erhöhen, um damit den Wirkungsgrad zu erhöhen;
- Fig. 8: eine schematische Ansicht eines dezentralen Ventilatorsystems mit Ventilatoren als Volumenstromregler
- Fig. 9: ein Beispiel für variablen Druck,

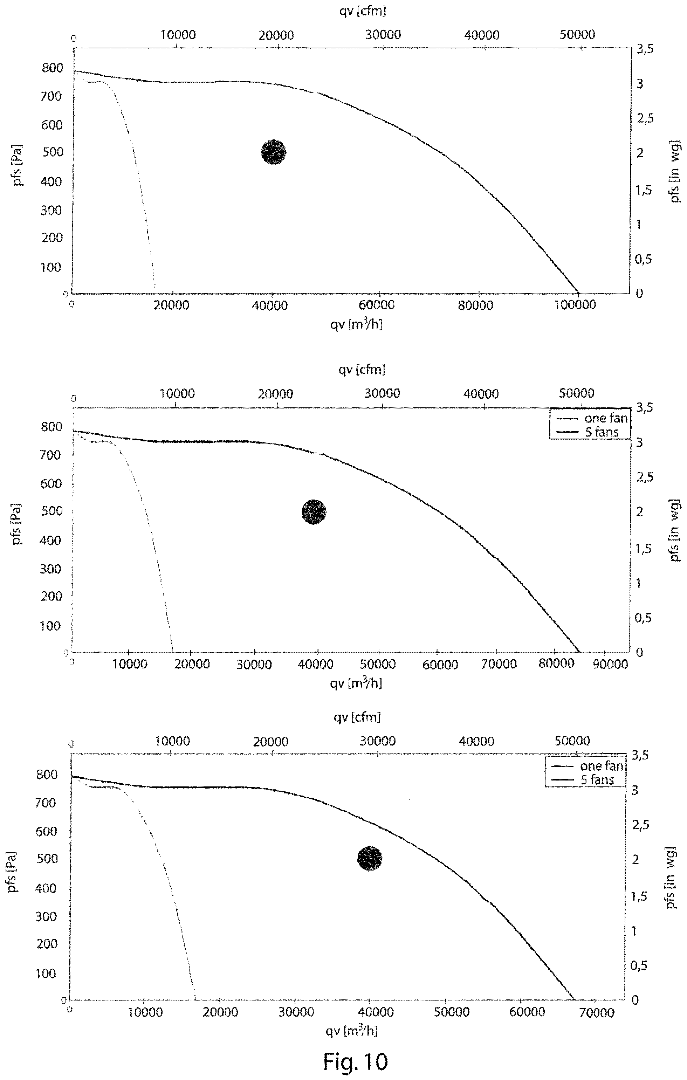

- Fig. 10: drei Diagramme eines Ausführungsbeispiels von 6 Ventilatoren, die in einem Fan-Grid parallel zusammengeschaltet sind, wovon aber jeweils eine unterschiedliche Anzahl an Ventilatoren aktiv eingeschaltet ist und
- Fig. 11: ein Beispiel für variablen Volumenstrom.

In den Figuren weisen gleiche Bezugszeichen auf gleiche strukturelle und/oder funktionale Merkmale hin.

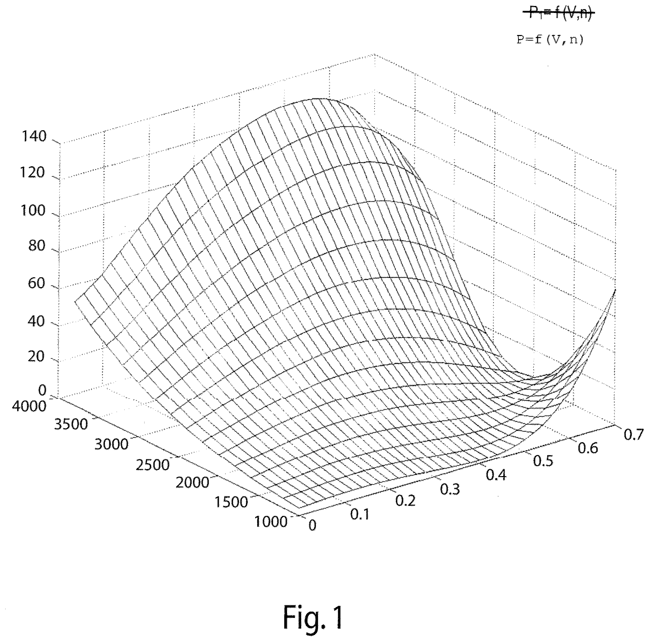

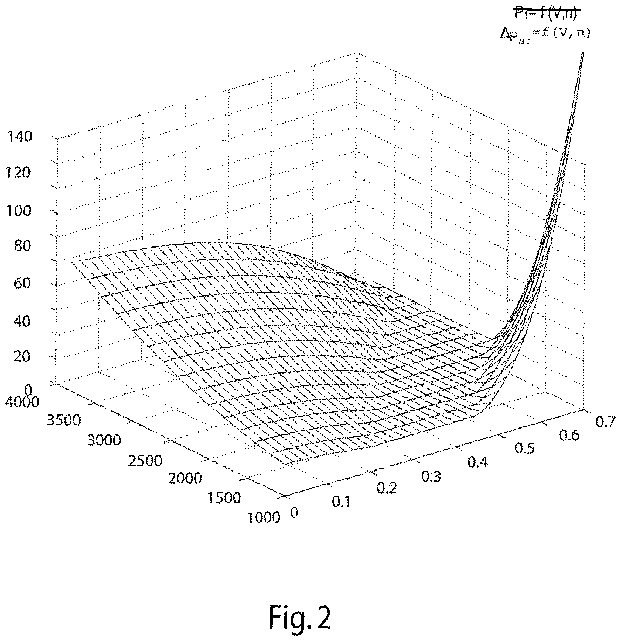

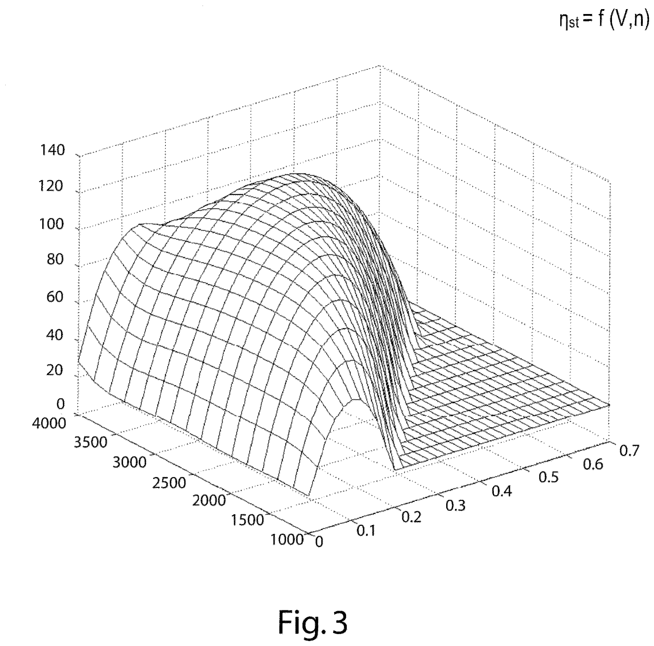

Gemäß einem Ausführungsbeispiel des erfindungsgemäßen Verfahrens wird zum Ermitteln des Betriebszustandes auf die Figuren 1 bis 3 verwiesen. In den Figuren 1 bis 3 ist hierzu jeweils ein Diagramm gezeigt, welches den Zusammenhang zwischen jeweils der Leistungsaufnahme P bzw. der Druckerhöhung Δpₛₜ (statischer Druck) und dem Wirkungsgrad ηₛₜ sowie dem Volumenstrom V und der Drehzahl n eines beispielhaften Ventilators aus der Gruppe der Ventilatoren zeigt. Diese Größen n, V, P, Δpₛₜ und ηₛₜ repräsentieren erfassbare Betriebszustände bzw. dazu korrelierende Werte, die im Regelungsverfahren verwendet werden.

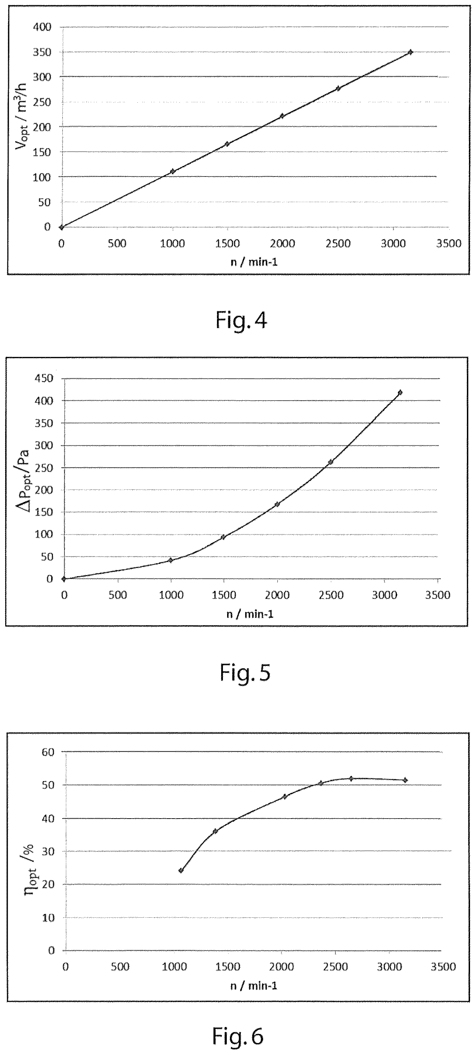

In den Figuren 4 bis 6 ist erläutert, wie die Optimalpunkte des Volumenstroms Vₒₚₜ und der Druckerhöhung Δpₒₚₜ und der entsprechend zugeordnete Wirkungsgrad ηₒₚₜ, welche drehzahlkonstant mit der gemessenen Drehzahl, erzielt werden können. Die Figur 4 zeigt hierzu ein Diagramm, welches das Optimierungspotential des Volumenstroms Vₒₚₜ in m³/h in Abhängigkeit der Drehzahl n eines Ventilators in einem Bereich zwischen der Drehzahl n=0 bis etwa n= 3200 Umdrehungen pro Minute zeigt.

Die Figur 5 zeigt ein Diagramm, welches das Optimierungspotential des statischen' Drucks Δpₒₚₜ in Abhängigkeit der Drehzahl n eines Ventilators darstellt und die Fig.6 zeigt das Optimierungspotential des Wirkungsgrades ηₒₚₜ in % in Abhängigkeit der Drehzahl n eines Ventilators.

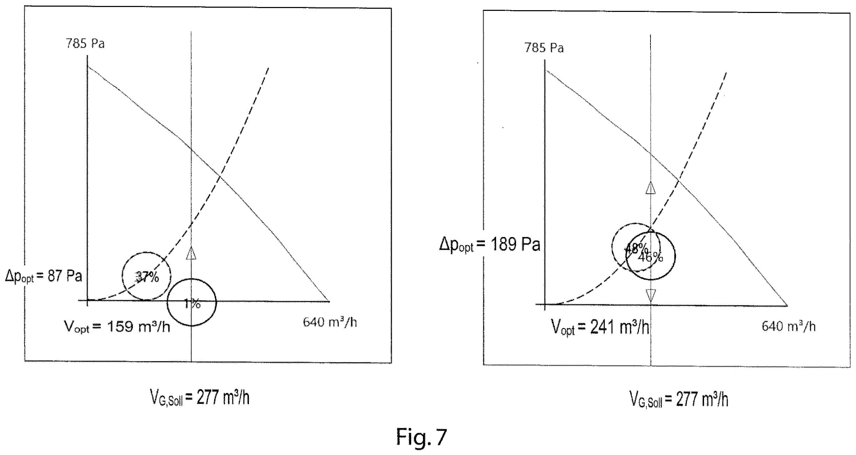

Die Fig. 7 zeigt eine Gegenüberstellung zweier Zustände eines Ventilators bei einem konstanten Volumenstrom im System, wobei der statische Druck im System reduziert wurde, um das Druckangebot Δpₛₜ für den Ventilator zu erhöhen, um damit den Wirkungsgrad zu erhöhen, wie dies in der rechten Abbildung gezeigt ist.

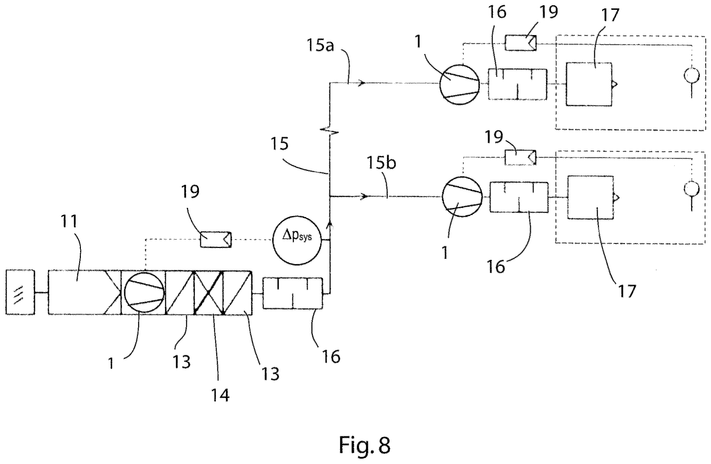

In der Fig. 8 ist eine schematische Ansicht eines dezentralen Ventilatorsystems mit Ventilatoren als Volumnstromregler gezeigt. Es ist ein Lüftungssystem aus einer Lüftungszentrale 10, umfassend einen Luftfilter 11, ein Ventilator 1, zwei Heizregister 13 und ein dazwischen liegendes Kälteregister 14 gezeigt, die über einen Lüftungskanal 15 mit einem Dämpfer 16 verbunden sind. Von dem Dämpfer 16 führt der Lüftungskanal 15 zu zwei Lüftungssträngen 15a, 15b in denen jeweils ein Ventilator 1 mit einem Dämpfer 16 und ein Luftdurchlass 17 vorgesehen sind. Ferner ist ein Sammler Δp_{sys} vorgesehen. Die Ventilatoren 1 sind mit Erfassungmittel 19 steuerungstechnisch verbunden, wobei dieses System beispielhaft als Volumenstromregelsystem ausgebildet ist, bei dem der Volumenstrom über die dezentralen Ventilatoren 1 mit dem beschriebenen Verfahren variabel geregelt wird, um den Druck im System einzuregeln.

Über die Lüftungszentrale 10 kann der Systemdruck für die dezentralen Ventilatoren 1 gemäß einer Optimierungsempfehlung eingestellt werden. Dies bedeutet:
- Δp_{st <} Δp_{opt :} Die Lüftungszentrale 10 soll den Systemdruck im Sammler Δp_{sys} reduzieren, so dass die einzelnen Ventilatoren 1 mehr Druck überwinden müssen bzw.
- Δp_{st >} Δp_{opt :} Die Lüftungszentrale 10 soll den Systemdruck im Sammler Δp_{sys} erhöhen, so dass die einzelnen Ventilatoren 1 entlastet werden und weniger Druck erzeugen müssen.

In einem anderen nicht näher dargestellten Ausführungsbeispiel sind z. B. 6 Ventilatoren im Parallelbetrieb zu einem Fan-Grid zur volumenstromvariablen Anwendung zusammengeschlossen.

Befindet sich der Volumenstrom V links vom Optimum, d. h. die Bedingung V < Vₒₚₜ herrscht vor, so kann eine Optimierung dadurch erreicht werden, dass beteiligte Ventilatoren 1 abgeschaltet werden. In der Figur 8 sind von oben nach unten die Situationen dargestellt, dass zunächst 6 Ventilatoren 1 im Fan-Grid arbeiten, dann nur noch 5 Ventilatoren 1 und darunter nur noch 4 Ventilatoren 1, wobei die anderen Ventilatoren 1 dann abgeschaltet wurden.

Die im Fan-Grid verbleibenden Ventilatoren 1 müssen im Sinne der Optimierungsempfehlung jeweils mehr Volumen bei gleichem Systemdruck (in diesem Beispiel 500 Pa) liefern, arbeiten damit aber insgesamt optimal, so dass sich im System ein höherer Wirkungsgrad einstellt.

Die einzelnen Ventilatoren arbeiten im Betriebspunkt mit einem Volumenstrom V von 10.000m³/h bei 500Pa jeweils optimal. Ein Betriebspunkt mit einem Volumenstrom V von 40.000m³/h bei 500Pa, kann wahlweise mit 6 bzw. 5 oder 4 Ventilatoren im Parallelbetrieb erreicht werden. Dabei ergeben sich die folgenden Daten: Gesamtwirkungsgrad bezogen auf die statische Druckerhöhung bei 6 Ventilatoren ηst= 56%, Leistung 100% (P = 9846 W); Gesamtwirkungsgrad bezogen auf die statische Druckerhöhung bei 5 aktiven Ventilatoren ηst= 59%, Leistungsreduzierung -5% (P = 9374 W) und Gesamtwirkungsgrad bezogen auf die statische Druckerhöhung bei 4 aktiven Ventilatoren ηst= 62%, Leistungsreduzierung -10% (P = 8988 W).

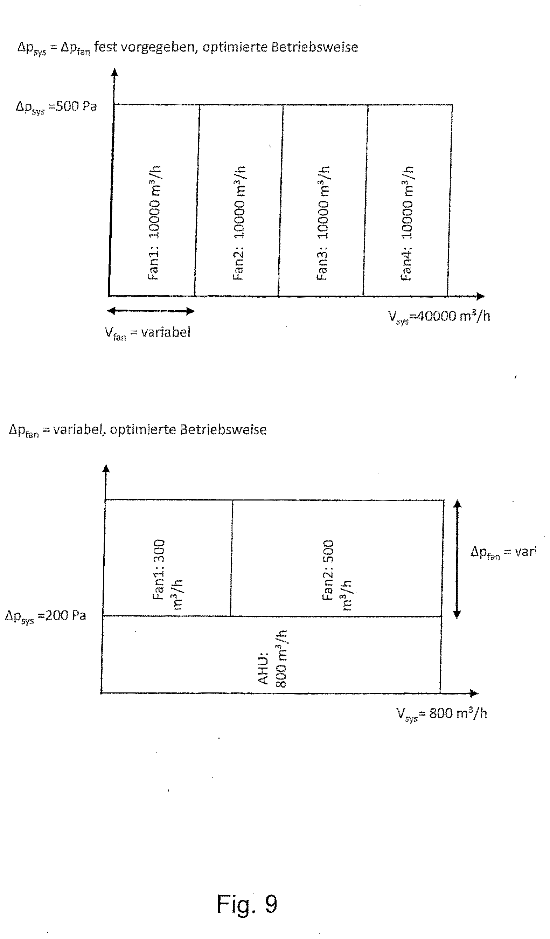

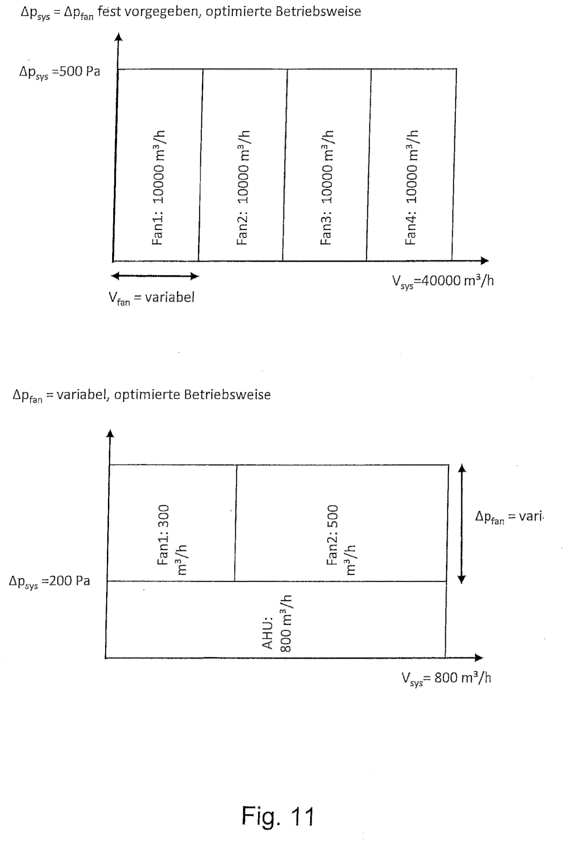

In den Figuren 9 und 11 sind die Zusammenhänge zwischen Volumenstrom V_{sys} und Druck Δp_{sys} für die Beispiele für variablen Druck bei konstantem Volumenstrom bzw. variablem Volumenstrom bei konstantem Druck jeweils für 6 bzw. 4 Ventilatoren dargestellt.

Eine solche Lösung stellt eine beispielhafte Umsetzung der Erfindung dar, wobei das Regelungsverfahren für die Ventilatoren darauf beruht, dass mehrere Ventilatoren des Fan-Grids ihren Betriebszustand sowie ihr jeweils energetisches Optimierungspotential kennen. Auf dieser Basis erfolgt die Aufteilung der Luftmengen auf die einzelnen Ventilatoren bei gleichbleibendem Systemdruck so, dass ein Betrieb von nur vier Ventilatoren zu einem optimierten Wirkungsgrad von ηₛₜ= 62% führt.

## Patentansprüche

1. Verfahren zum Regeln eines Systems aus einer Anzahl n von mindestens zwei Ventilatoren (1) und/oder Ventilatorgruppen zur Erzeugung eines definierten Sollwertes (V_{G,soll}, Δp_{G,soll}) entweder eines definierten Volumenstromes V_{G,Soll} im System bei variabler Druckerhöhung Δp_{G,Soll} oder umgekehrt, mit den folgenden Schritten:
a) Ermitteln eines Betriebszustandes der Ventilatoren (1);
b) Ermitteln eines energetischen Optimierungspotentials und eines optimierten Betriebszustandes des und/oder der jeweiligen Ventilatoren (1);
c) Vergleichen des ermittelten Betriebszustands in Schritt a) mit dem jeweils optimierten Betriebszustand des und/oder der Ventilatoren (1) aus Schritt b), um eine Optimierungsempfehlung bezogen auf einen Ventilator (1) zu erhalten und
d) Korrektur des jeweils variablen Sollwertes (V_{G,Soll}, Δp_{G,Soll}) durch Änderung des Betriebspunktes wenigstens eines Ventilators (1) je nachdem welcher Sollwert fest vorgegeben ist, um wenigstens einen der Ventilatoren (1) in einen energetisch optimierten oder optimalen Betriebspunkt zu bringen und dadurch einen Wirkungsgrad η_{G} des Systems zu erhöhen,
wobei in Schritt a) die Ermittlung des Betriebszustandes der Ventilatoren (1) dadurch erfolgt, dass wenigstens ein Volumenstrom V und eine Drehzahl n des jeweiligen Ventilators (1) und deren Druckerhöhung Δpₛₜ, Leistungsaufnahme P und Wirkungsgrad η_{G} als Funktion des Volumenstroms und der Drehzahl, welche vorzugsweise in der Motorelektronik der Vielzahl von Ventilatoren (1) hinterlegt werden, ermittelt werden und wobei bei der Ermittlung der Optimierungsempfehlung zur Anpassung des Betriebszustands bei Schritt c) berücksichtigt wird welcher Ventilator (1) einen jeweils höchsten Leistungsbeitrag bei einer Luftförderung im System besitzt.

2. Verfahren nach Anspruch 1, **dadurch gekennzeichnet, dass** der Schritt d) dergestalt erfolgt, dass eine Mehrzahl, eine oder mehrere Ventilatorbaugruppen oder alle Ventilatoren (1) in einen gegenüber dem nicht korrigierten Betriebspunkt energetisch optimierten oder optimalen Betriebspunkt gebracht werden.

3. Verfahren nach Anspruch 1 oder 2, **dadurch gekennzeichnet, dass** zur Erhöhung des Wirkungsgrads η_{G} des Systems bei einem definierten Sollwertes (V_{G,soll}, Δp_{G,soll}) ein oder mehrere der Ventilatoren (1) abgeschaltet werden.

4. Verfahren nach Anspruch 1, **dadurch gekennzeichnet, dass** die die Druckerhöhung Δpₛₜ und die Leistungsaufnahme P des jeweiligen Ventilators (1) aus dessen Volumenstrom V und dessen Drehzahl n ermittelt werden.

5. Verfahren nach einem der vorhergehenden Ansprüche, wobei zum Ermitteln des Optimierungspotentials in Schritt b) ein optimierter Volumenstrom Vₒₚₜ und eine optimierte Druckerhöhung Δpₒₚₜ ermittelt werden.

6. Verfahren nach einem der vorhergehenden Ansprüche, wobei aus dem Vergleich der Betriebszustände aus Schritt a) und Schritt b) eine Optimierungsempfehlung in Form einer Anpassung des aktuellen Betriebszustandes einer oder mehrere der Ventilatoren (1) erfolgt, wobei
a. die Optimierungsempfehlung bei einem definierten konstant zu haltendem Volumenstrom V_{G,Soll} darin besteht, eine Druckerhöhung- oder senkung vorzunehmen, je nachdem ob die optimierte Druckerhöhung Δpₒₚₜ größer oder kleiner ist, als die ermittelte Druckerhöhung Δpₛₜ oder
b. die Optimierungsempfehlung bei einem definierten konstant zu haltendem Druck p_{G,Soll} darin besteht, den Volumenstrom zu erhöhen oder zu senken, je nachdem ob der optimiert Volumenstrom Vₒₚₜ größer oder kleiner ist, als der ermittelte Volumenstrom V.

7. Verfahren nach einem der vorhergehenden Ansprüche, wobei die Erfassung der Leistungsaufnahme P jedes Ventilators (1) jeweils vor und nach einer Korrektur in Schritt d) erfolgt und ermittelt wird, ob die Gesamtsumme aller Leistungsaufnahmen P der Ventilatoren (1) als Reaktion auf den Optimierungsschritt gegenüber der zuvor ermittelten Gesamtsumme aller Leistungsaufnahmen P reduziert wurde.

8. Verfahren nach Anspruch 7, wobei im Falle dass die Gesamtsumme aller Leistungsaufnahmen P nach dem Optimierungsschritt nicht reduziert wurde, die Anpassung im zuvor durchgeführten Optimierungsschritt wieder rückgängig gemacht wird.

9. Verfahren nach Anspruch 6 bis 8, wobei die Maßnahmen gemäß den Ansprüchen 6 bis 8 zyklisch solange wiederholt werden, bis sich ein definierter Gesamtwirkungsgrad oder ein jeweils zum vorherigen Zyklus optimierter Gesamtwirkungsgrad ergibt, wobei die Maßnahmen spätestens nach einer definierten Anzahl von Zyklen abgebrochen werden.

10. Regeleinrichtung
(1) zum Ausführen eines Verfahrens nach einem der Ansprüche 1 bis 9, wobei die Regeleinrichtung folgendes aufweist:
a. Erfassungsmittel zum Ermitteln des Volumenstroms einzelner und/oder aller Ventilatoren (1);
b. Ermitteln eines energetischen Optimierungspotentials Vₒₚₜ und Δp_{st,opt} und eines optimierten Betriebszustandes der jeweiligen Ventilatoren (1), welche drehzahlkonstant mit der Drehzahl n erreicht werden können;
c. einen Komparator zum Vergleichen von ermittelten Betriebszuständen und optimierten Betriebszuständen, um daraus eine spezifische Optimierungsempfehlung zu gewinnen;
d. Mittel zur Anpassung des jeweils variablen Sollwertes durch Änderung des Betriebszustandes wenigstens eines Ventilators (1) je nachdem welcher Sollwert im System fest vorgegeben ist, um wenigstens einen der Ventilatoren (1) in einen energetisch optimierten oder optimalen Betriebspunkt zu bringen und dadurch den Wirkungsgrad η_{G} des Systems zu erhöhen.

## Claims

1. A method for controlling a system consisting of a number n of at least two fans (1) and/or fan groups for generating a defined setpoint value (V_{G,setpoint}, Δp_{G,set-point}) of either a defined volume flow V_{G,setpoint} in the system in the case of variable pressure increase Δp_{G,setpoint} or vice versa, with the following steps:
a) determining an operating state of the fans (1);
b) determining a power optimization potential and an optimized operating state of the respective fan and/or the respective fans (1);
c) comparing the operating state determined in the aforementioned step a) with the respective optimized operating state of the fan and/or the fans (1) from step b), in order to obtain an optimization recommendation with respect to one fan (1), and
d) correction of the respective variable setpoint value (V_{G,setpoint}, Δp_{G,setpoint}) by changing the operating point of at least one fan (1), depending on which setpoint value is fixedly predetermined in order to bring at least one of the fans (1) to a power optimized or optimal operating point and thereby to increase an efficiency η_{G} of the system,
wherein in step a), the determination of the operating state of the fans (1) occurs in that
at least a volume flow V and a rotation speed n of the respective fan (1) and their pressure increase Δpₛₜ, power consumption P and efficiency η_{G} are determined as a function of the volume flow and of the rotation speed, which are preferably stored in the motor electronics of the plurality of fans (1), and wherein, in the determination of the optimization recommendation for the adjustment of the operating state in step c), it is taken into consideration which fan (1) has a highest power contribution in an air conveyance in the system.

2. The method according to Claim 1, **characterized in that** step d) occurs in such a manner that a plurality, one or more fan components or all the fans (1) is/are brought to a power optimized or optimal operating point with respect to the uncorrected operating point.

3. The method according to Claim 1 or 2, **characterized in that**, for increasing the efficiency η_{G} of the system, in the case of a defined setpoint value (V_{G,setpoint}, Δp_{G,setpoint}), one or more of the fans (1) are switched off.

4. The method according to Claim 1, **characterized in that** the pressure increase Δpₛₜ and the power consumption P of the respective fan (1) are determined from its volume flow V and its rotation speed n.

5. The method according to any one of the preceding claims, wherein, for determining the optimization potential in step b), an optimized volume flow Vₒₚₜ and an optimized pressure increase Δpₒₚₜ are determined.

6. The method according to any one of the preceding claims, wherein, from the comparison of the operating states from step a) and step b), an optimization recommendation in the form of an adjustment of the current operating state of one or more of the fans (1) occurs, wherein
a. the optimization recommendation in the case of a defined volume flow V_{G,setpoint} to be kept constant consists in carrying out a pressure increase or decrease, depending on whether the optimized pressure increase Δpₒₚₜ is greater than or smaller than the determined pressure increase Δpₛₜ or
b. the optimization recommendation in the case of a defined pressure P_{G,setpoint} to be kept constant consists in increasing or lowering the volume flow, depending on whether the optimized volume flow Vₒₚₜ is greater than or smaller than the determined volume flow V.

7. The method according to any one of the preceding claims, wherein the acquisition of the power consumption P of each fan (1) in each case occurs before and after a correction in step d), and it is determined whether the total sum of all the power consumptions P of the fans (1), in reaction to the optimization step, was reduced in comparison to the previously determined total sum of all the power consumptions P.

8. The method according to Claim 7, wherein in case the total sum of all the power consumptions P after the optimization step was not reduced, the adjustment in the previously performed optimization step is reversed.

9. The method according to Claim 6 to 8, wherein the measures according to Claims 6 to 8 are cyclically repeated until the result is a defined total efficiency and a total efficiency optimized in each case with respect to the previous cycle, wherein the measures are interrupted at the latest after a defined number of cycles.

10. A control device (1) for carrying out a method according to any one of Claims 1 to 9, wherein the control device comprises the following:
a. acquisition means for determining the volume flow of individual fans and/or all the fans (1);
b. determining of a power optimization potential Vₒₚₜ and Δp_{st, opt} and an optimized operating state of the respective fans (1), which can be achieved with constant rotation speed with the rotation speed n;
c. a comparator for comparing determined operating states and optimized operating states in order to obtain a specific optimization recommendation therefrom;
d. means for the adjustment of the respective variable setpoint value by changing the operating state of at least one fan (1) depending on which setpoint value in the system is fixedly predetermined, in order to bring at least one of the fans (1) to a power optimized or optimal operating point and thereby increase the efficiency ηG of the system.

## Revendications

1. Procédé permettant de régler un système composé d'un nombre n d'au moins deux ventilateurs (1) et/ou de groupes de ventilateurs pour générer une valeur de consigne définie (V_{G,soll}, Δ_{pG,soll}), d'un débit volumique défini V_{G,soll} dans le système avec une augmentation de pression Δp_{G,Soll} variable, ou inversement, comprenant les étapes suivantes consistant à :
a) déterminer un état de fonctionnement des ventilateurs (1) ;
b) déterminer un potentiel d'optimisation énergétique et un état de fonctionnement optimisé du et/ou des ventilateurs (1) respectifs ;
c) comparer l'état de fonctionnement déterminé à l'étape a) avec l'état de fonctionnement respectivement optimisé du et/ou des ventilateurs (1) de l'étape b) pour obtenir une recommandation d'optimisation relative à un ventilateur (1), et
d) corriger la valeur de consigne (V_{G,Soll}, Δp_{G,Soll}) respectivement variable en modifiant le point de fonctionnement d'au moins un ventilateur (1) en fonction de la valeur de consigne qui est prédéfinie de manière fixe afin d'amener au moins l'un des ventilateurs (1) à un point de fonctionnement optimisé ou optimal sur le plan énergétique et d'augmenter ainsi le rendement η_{G} du système,
dans lequel, à l'étape a), la détermination de l'état de fonctionnement des ventilateurs (1) est effectuée en ce qu'au moins un débit volumique V et une vitesse de rotation n du ventilateur (1) respectif et leur augmentation de pression Δpₛₜ, puissance absorbée P et rendement η_{G} sont déterminés en fonction du débit volumique et de la vitesse de rotation qui sont de préférence sauvegardés dans l'électronique du moteur de la pluralité de ventilateurs (1), et
dans lequel, lors de la détermination de la recommandation d'optimisation pour l'adaptation de l'état de fonctionnement à l'étape c), on tient compte du ventilateur (1) qui possède une contribution à la puissance respectivement la plus élevée lors d'un refoulement d'air dans le système.

2. Procédé selon la revendication 1, **caractérisé en ce que** l'étape d) est exécutée de telle sorte qu'une pluralité, un ou plusieurs sous-ensembles de ventilateurs ou tous les ventilateurs (1) sont amenés à un point de fonctionnement optimisé ou optimal sur le plan énergétique par rapport au point de fonctionnement non corrigé.

3. Procédé selon la revendication 1 ou 2, **caractérisé en ce que**, un ou plusieurs ventilateurs (1) sont déconnectés à une valeur de consigne définie (V_{G,soll}, Δp_{G,soll}) pour augmenter le rendement η_{G} du système.

4. Procédé selon la revendication 1, **caractérisé en ce que** l'augmentation de pression Δpₛₜ et la puissance absorbée P du ventilateur (1) respectif sont déterminés à partir de son débit volumique V et de sa vitesse de rotation n.

5. Procédé selon l'une quelconque des revendications précédentes, dans lequel, pour la détermination du potentiel d'optimisation à l'étape b), un débit volumique optimisé Vₒₚₜ et une augmentation de pression optimisée Δpₒₚₜ sont déterminés.

6. Procédé selon l'une quelconque des revendications précédentes, dans lequel, à partir de la comparaison des états de fonctionnement de l'étape a) et de l'étape b), une recommandation d'optimisation sous la forme d'une adaptation de l'état de fonctionnement actuel d'un ou de plusieurs des ventilateurs (1) est effectuée, dans lequel
a) la recommandation d'optimisation à un débit volumique défini V_{G,Soll} à maintenir constant consiste à procéder à une augmentation ou à une baisse de pression en fonction du fait que l'augmentation de pression optimisée Δpₒₚₜ est supérieure ou inférieure à l'augmentation de pression déterminée Δpₛₜ, ou
b) la recommandation d'optimisation à une pression définie p_{G,Soll} à maintenir constante consiste à augmenter ou à réduire le débit volumique en fonction du fait que le débit volumique optimisé Vₒₚₜ est supérieur ou inférieur au débit volumique V déterminé.

7. Procédé selon l'une quelconque des revendications précédentes, dans lequel la détection de la puissance absorbée P de chaque ventilateur (1) est effectuée respectivement avant ou après une correction à l'étape d), et il est déterminé si la somme totale de toutes les puissances absorbées P des ventilateurs (1) a été réduite en réponse à l'étape d'optimisation par rapport à la somme totale de toutes les puissances absorbées P, déterminée précédemment.

8. Procédé selon la revendication 7, dans lequel, au cas où la somme totale de toutes les puissances absorbée P n'a pas été réduite après l'étape d'optimisation, l'adaptation est annulée au cours de l'étape d'optimisation effectuée précédemment.

9. Procédé selon les revendications 6 à 8, dans lequel les mesures selon les revendications 6 à 8 sont répétées de manière cyclique jusqu'à obtenir un rendement total défini ou un rendement total respectivement optimisé par rapport au cycle précédent, dans lequel les mesures sont abandonnées au plus tard après un nombre défini de cycles.

10. Dispositif de régulation (1) permettant d'exécuter un procédé selon l'une quelconque des revendications 1 à 9, dans lequel le dispositif de régulation présente :
a) des moyens de détection pour déterminer le débit volumique de ventilateurs individuels et/ou de tous les ventilateurs (1) ;
b) déterminer un potentiel d'optimisation énergétique Vₒₚₜ et Δp_{st,opt} et un état de fonctionnement optimisé des ventilateurs (1) respectifs qui peuvent être atteints avec la vitesse de rotation n à vitesse de rotation constante ;
c) un comparateur pour comparer des états de fonctionnement déterminés et des états de fonctionnement optimisés afin d'en obtenir une recommandation d'optimisation spécifique ;
d) des moyens pour adapter la valeur de consigne respectivement variable en modifiant l'état de fonctionnement d'au moins un ventilateur (1) en fonction de la valeur de consigne qui est prédéfinie de manière fixe dans le système afin d'amener au moins l'un des ventilateurs (1) à un point de fonctionnement optimisé ou optimal sur le plan énergétique et augmenter ainsi le rendement η_{G} du système.
